# EUROPÄISCHE PATENTSCHRIFT

(11) **EP 0 637 277 B1**
(45) Veröffentlichungstag und Bekanntmachung des Hinweises auf die Patenterteilung: **04.09.1996**
(21) Anmeldenummer: 93908809.2
(22) Anmeldetag: 23.04.1993
(51) Int. Cl.: B23Q 7/14, B23Q 3/155

(54) **VORRICHTUNG ZUR SPANGEBENDEN METALLBEARBEITUNG**
DEVICE FOR CUTTING METAL-MACHINING
DISPOSITIF POUR L'USINAGE DE METAUX PAR ENLEVEMENT DE COPEAUX

(30) Priorität: 24.04.1992 DE 9205554 U
(43) Veröffentlichungstag der Anmeldung: 08.02.1995
(73) Patentinhaber: KOPP WERKZEUGMASCHINEN GmbH, D-89231 Neu-Ulm (DE)
(72) Erfinder: KLICPERA, Udo, D-8962 Pfronten (DE); SCHLIETER, Bernd, D-7915 Elchingen (DE); SCHRÖPPEL, Martin, D-7901 Oberkirchberg (DE)
(74) Vertreter: Allgeier, Kurt
(86) Internationale Anmeldenummer: DE9300353
(87) Internationale Veröffentlichungsnummer: WO9322100

(56) Entgegenhaltungen:
- DE-A- 3 605 470
- FR-A- 2 507 521
- US-A- 4 794 686
- MACHINERY AND PRODUCTION ENGINEERING Bd. 144, Nr. 3686, 1. Januar 1986, WHITHAM Seite 7 'The ultimate in flexible machining'
- PATENT ABSTRACTS OF JAPAN vol. 10, no. 196 (M-497)(2252) 10. Juli 1986 & JP-A-61 38 843 (NIKKEN KOSKUSHO K.K.) 30 July 1984

## Beschreibung

Die Erfindung betrifft eine Vorrichtung zur spangebenden Metallbearbeitung jeweils eines von mehreren auf Werkstück-Paletten (WP) eines Palettenmagazins (PM) aufspannbaren, in die Bearbeitungsposition (BP) zugeführten Werkstücks (W).

Derartige Vorrichtungen sind schon vorgeschlagen worden, bei denen mittels einer Steuervorrichtung zur getakteten Folgesteuerung mehrere Maschinenfunktionenen teilweise gleichzeitig und auch teilweise aufeinanderfolgend ablaufen, und zwar das Zuführen einer vorgewählten mit einem Werkstück beladenen Werkstück-Palette von einem Bereitstellungsplatz zur Bearbeitungsposition sowie mittels einer Werkzeugwechselvorrichtung das Einsetzen eines vorgewählten Bearbeitungswerkzeugs in die Pinole der Werkzeugspindelheit.

Werkzeugmagazin und Wechseleinrichtung gewährleisten eine automatische, der jeweiligen Bearbeitungsaufgabe entsprechende Werkzeugversorgung.

Dabei ist es erforderlich, dass der Werkzeugträger der Bearbeitungsmaschine bzw. dessen Aufspannplatte zur massgenauen Aufnahme der Werkstück-Paletten ausgebildet ist.

Das Beladen der Werkstück-Paletten mit zur Bearbeitung bestimmten Werkstücken erfolgt auf einem Paletten-Montageplatz. Dort werden die Werkstücke mittels einer Aufspannvorrichtung massgenau justiert, auf die Werkstück-Paletten aufgespannt und dann zu einem Bereitstellungsplatz verbracht.

Von diesem kann im Zeitpunkt des Werkstückwechsels die Werkstück-Palette manuell oder mittels einer Beladevorrichtung, z. B. eines Greifers - oder bei schweren Werkstücken eines Hebezeugs - in die Bearbeitungsposition auf dem Werkstückträger der Bearbeitungsmaschine verbracht werden, von welcher zuvor das bereits bearbeitete Werkstück gelöst und entfernt worden war.

Es sind ferner auf Führungsbahnen verschiebbare Zubringervorrichtungen für die Werkstückpaletten bekannt. Ausserdem ist bereits vorgeschlagen worden, auf einer gemeinsamen Vorrichtung mehrere Bereitstellungsplätze für mit Werkstücken beladene Werkstück-Paletten anzuordnen, die karusselartig drehbar oder aber auch ähnlich einer Förderbahn ausgebildet sein kann. Von den vorhandenen Beladeplätzen der Vorrichtung muss wenigstens einer in einer Stellung arretierbar sein, in welcher das Auswechseln der Werkstück-Paletten dadurch erfolgen kann, dass das bearbeitete Werkstück aus der Vorrichtung entfernt und ein noch unbearbeitetes auf einer Werkstück-Palette aufgespanntes Werkstück auf den freigewordenen Beladeplatz eingesetzt wird.

In "MACHINERY AND PRODUKTION ENGENEERING" Bd. 144, Nr. 3686, 1. Jan. 1986, S. 7, ist eine Anlage gemäß dem Oberbegriff des Anspruchs 1 dargestellt, die mehrere unabhängige, mechanisch aufwendige und zeitraubende Funktionen zum Werkzeug- und Palettenwechsel ausführt. Das programmgemäss benötigte Werkstück wird über eine Palette einer Palettenwechselvorrichtung mit eigener Förderstrecke zugeordnet. Hier ist jeweils immer nur eine Palette bestück- und förderbar. Von hier aus erfolgt die Weitergabe an eine erste, um eine vertikale Achse drehbare Zubringereinheit ohne Förderstrecke, die mit Werkzeugen und Werkzeugspindeln als Magazin bestückt ist. Dieses Magazin ist mit einem weiteren Magazin über einen um eine vertikale Achse drehbaren, horizontal verfahrbaren zweiten Zubringer verbunden. Durch Verfahren, Drehen und Schwenken desselben wird das Werkzeug in Funktionsstellung in die erforderliche Bearbeitungskopf- Einheit gebracht. Diese Vorgänge und die mehrfach zusammengesetzten Funktionsabläufe erfordern nicht nur eine äusserst komplexe und komplizierte Steuerung, sie können auch wegen der grossen zu bewegenden Massen, der Start- und Verzögerungsvorgänge, nur sehr langsam erfolgen. Dadurch wird das System schwerfällig und unflexibel. Ausserdem benötigt es einen hohen Platz- und Raumbedarf.

Bei derartigen Vorrichtungen an Bearbeitungsmaschinen besteht stets das Bedürfnis, die einzelnen Funktionen und Wechsel-Operationen so rasch und einfach wie möglich durchzuführen, um den mechanischen und den Steuerungs-Aufwand so klein wie möglich zu halten. Ausserdem wird ein geringer Platzbedarf dieser Vorrichtungen angestrebt. Ausgehend von diesen Gegebenheiten wird eine Vorrichtung mit den Merkmalen des Anspruchs 1 vorgeschlagen. Es ergibt sich eine wesentliche Vereinfachung dadurch, daß bei einer als Palettenmagazin für wenigstens zwei Werkstück-Paletten ausgebildeten Aufnahmevorrichtung wenigstens ein in vertikaler Ebene ausgeordneter Bereitstellungsplatz vorgesehen und der Belade- und Aufspannplatz horizontal ausgebildet ist.

Wenn der Bereitstellungsplatz der Paletten für die der Bearbeitung zuzuführenden Werkstücke nach der Erfindung in vertikaler Ebene angeordnet ist, dann können die Werkstück-Paletten in dieser Vertikalebene unmittelbar, d.h. ohne zusätzliche Schwenk- oder Kippbewegungen in die Bearbeitungsposition überführt und auf dem Werkstückträger arretiert werden. Dies ist dann besonders vorteilhaft, wenn das Werkstück ein horizontal-axialer Rotationskörper ist und der Werkzeugträger einen Drehantrieb aufweist; der Rotationskörper kann dann zusätzlich in einer Lünette und/oder in einem Reitstock gelagert sein. Ferner ist die Ausgestaltung mit einem horizontal ausgericheteten Belade- und Aufspannplatz vorteilhaft, insbesondere bei schweren Werkstücken, die gegebenenfalls mit einem Fördermittel herangeführt werden müssen. Das Aufspannen und Justieren mittels einer hierzu bereitgestellten Vorrichtung auf der Werkstück-Palette kann dadurch in einfacher Weise ohne erhebliche manuelle Anstrengungen oder Zugriffe durchgeführt werden.

Ganz wesentlich erscheint hierbei die erfindungsgemässe Ausbildung eines um eine horizontale Achse (x) um 180° schwenkbaren Zubringers für wenigstens eine beladene Werkstück-Palette vom Bereitstellungsplatz in die Bearbeitungsposition des Werkstückträgers, der eine Förderstrecke für die Werkstück-Palette aufweist, die an den Bereitstellungsplatz einerseits und an die Bearbeitungsposition des Werkstückträgers andererseits anschliessbar ist. Dabei ist der Zubringer in einer bevorzugten Ausbildungsweise als lineare, d.h. geradlinige Förderstrecke geformt.

Eine vorteilhafte Ausbildung der Erfindung ist darin zu sehen, dass das wenigstens zwei Beladeplätze für Werkstück-Paletten aufweisende Paletten-Magazin um die waagrechte Achse schwenkbar und in der Anzahl der Beladeplätze entsprechenden Zahl von Schwenkstellungen arretierbar ist und ferner ist es besonders vorteilhaft, wenn die Beladeplätze des Paletten-Magazins und/oder die Werkstück-Paletten und der Zubringer sowie der Werkstückträger mit Halterungselementen versehen sind, mittels welchen die Werkstück-Paletten auf den Beladeplätzen dem Zubringer und dem Werkstückträger justiert arretierbar sind. Damit ist sichergestellt, dass die Werkstück-Paletten in jeder Bewegungslage des Paletten-Magazins und/oder des Zubringers sicher mit ihrem jeweiligen Belade- oder Transportplatz verbunden sind.

Wesentlich ist dabei, dass die Arretierung zeitverlustlos aktiviert und aufgehoben werden kann. Dies wird dadurch ermöglicht, dass die Beladeplätze mit Führungsleisten entsprechend den standardisierten Werkstück-Paletten und mit auf die Palettenführungen unter Federdruckwirkung anpressbar Klemmpratzen versehen sind. Die passgenaue Lage der Paletten wird in an sich bekannter Weise durch Anschläge oder durch entsprechend formschlüssig Justier-Elemente sichergestellt.

Um diese Sicherheit weiterhin zu gewährleisten, muss vorgesehen sein, dass diese Klemmkraft nur dann gelöst werden kann, wenn die betreffende Werkstück-Palette von ihrem jeweiligen Platz zu entfernen bzw. auszutauschen ist. Hierzu ist die Vorrichtung derart ausgebildet, dass die Klemmung der standardisierten Werkstück-Paletten in den Führungsnuten der Beladeplätze nur in je der dem Palettenwechsel ermöglichenden Schwenkstellung des Zubringers mittels eines entgegen dem Federdruck durch einen vom Zubringer-Schwenkantrieb angetriebenen und mit diesem verriegelten Stössel lösbar ist.

Weiterhin ist vorteilhaft, wenn die standardisierten Werkstück-Paletten mit Ausnehmungen und die Förderstrecke mit in diese eingreifenden Mitnahmeorganen zum Erfassen und Weiterfördern der im Bereitstellungsplatz des Paletten-Magazins und in der Bearbeitsposition des Werkstückträgers bereitstehenden Werkstück-Paletten versehen sind. Diese standardisierten Werkstück-Paletten entsprechen im wesentlichen der DIN-Normen; sie sind jedoch an zwei Seitenkanten mit einander gegenüberliegenden Ohren versehen, in welche die Ausnehmungen eingearbeitet sind, die zum Eingriff der Mitnahmeorgane dienen. Die einfachste Ausführung besteht darin, dass bei vertikaler Stellung der Werkstück-Palette in die in waagrechter Richtung beidseitigen Ohren senkrecht verlaufende Nuten zum Eingriff der als Mitnahmebolzen ausgebildeten Mitnahmeorgane eingearbeitet sind.

In einer vorteilhaften Ausbildungsweise kann die Förderstrecke des Zubringers als Kettenförderer vorgesehen sein, und dabei kann die Anordnung weiterhin so getroffen sein, dass der Antriebsstrang des Kettenförderers aus dem Kettenförderer-Antriebsmotor und einer in der horizontalen Schwenkachse des Zubringers angeordnete Antriebswelle und einem auf dieser befestigte in die Förderkette eingreifendes Antriebsritzel ausgebildet ist.

In Abwandlung dieser Ausgestaltung kann die Förderstrecke auch aus zwei parallel angeordneten Gewindespindeln bestehen, deren Gewindemuttern in Ausnehmungen der Werkstück-Paletten eingreifende Mitnahmeorgane aufweisen wobei die Gewindespindeln mit Rechts- und Linksgewinde und/oder gegenläufig angetrieben sein können.

Eine andere bevorzugte Ausbildungsweise kann auch noch darin bestehen, dass die Förderstrecke aus zwei gegenläufig bewegbar angetriebenen, an ihren beidseitig ausfahrbaren Enden Mitnahmeorgane aufweisenden Zahnstangen gebildet ist, und die Mitnahmeorgane zum beidseitigen gleichzeitigen Eingriff in die Ausnehmungen der Werkstück-Paletten auf der Bereitstellungsplatz-Seite und der Werkstückträger-Seite ausgebildet sind. Diese Ausführung erscheint besonders einfach und betriebssicher.

Als weitere Abwandlung ist es erfindungsgemäss auch möglich, dass die Mitnahmeorgane zum beidseitigen gleichzeitigen Eingriff in die Ausnehmungen der Werkstück-Paletten auf der Bereitstellungsplatz-Seite und der Werkstückträger-Seite ausgebildet sind oder aber weiterhin, dass die Förderstrecke aus zwei gegenläufig angetriebenen, teleskopierbaren Stäben gebildet ist, an deren beidseitig ausfahrbaren

Enden Mitnahmeorgane zum gleichzeitigen beidseitigen Eingriff in die Ausnehmungen der Werkstückpaletten auf der Bereitstellungsplatz-Seite und der Werkstückträger-Seite vorgesehen sind.

Bei der Ausbildungsweise der Förderstrecke mit Gewindespindeln, Zahnstangen oder Teleskopstäben können die Mitnahmeorgane als aus lenkbare oder ausrückbare hakenartige Mitnahmenasen geformt sein, welche in die Nuten oder dergl. Ausnehmungen in den beidseitigen Ohren der Werkstückpaletten eingreifen.

Im Rahmen der Erfindung liegt auch die weitere Ausgestaltung der Vorrichtung zu einem hochautomatisierten Fertigungszentrum durch Verbindung mit einem Vorrichtungsteil zum Wechseln sowohl der Werkzeuge zwischen dem Werkzeugmagazin und der jeweils in Arbeitsposition befindlichen Werkzeugspindel bzw. Werkzeugspindeleinheit, wie auch der Werkzeugspindeleinheit aus ihrer Bereitschaftsposition in die Arbeitsposition.

Die erstgenannte Vorrichtung weist einen kraftbetätigbaren, verfahr- und drehbaren sowie verschwenkbaren Zangengreifer auf, dessen öffnen- und schliessbare Greiferbacken auf die jeweilige Werkzeugentnahmeachse und die Spindelachse ausrichtbar sind.

Ausgehend hiervon ist die erfindungsgemässe Werkzeugspindeleinheitwechselvorrichtung mit einer vertikalen, auf einer gemeinsamen Maschinenfuss-Einheit angeordnete Ständerkonsole sowie einer mit dieser betriebsmässig lös- und auswechselbar verbundenen Werkzeugspindeleinheit und einer unterhalb der betriebsmässig mit der Ständerkonsole verbundenen Werkzeugspindeleinheit angeordneten, zum richtungsgeführten Wegschieben der von der Ständerkonsole gelösten Werkzeugspindeleinheit aus ihrer Arbeitsposition in eine im Abstand von der Ständerkonsole eingerichtete Bereitschaftsposition ausgebildeten (ersten) Verschiebebahn versehen.

Diese Lösung beinhaltet einen mittels der gemeinsamen Werkzeugfuss-Einheit mit dem Vorrichtungsteil zum schnellen automatisierten Wechseln der Werkzeuge verbundenen Vorrichtungsteil, der eine weitere Dimension in der Auswahl der aufeinanderfolgend einzusetzenden Werkzeuge eröffnet. Diese müssen jetzt nicht mehr danach ausgewählt werden, welche Werkzeugaufnahme bzw. Spindel der Werkzeugspindel zur Verfügung steht, sondern es können in beliebiger Reihenfolge in gleicher Werkstückaufspannung unabhängig von der Werkzeuggrösse und deren Konus- oder Schaftgrösse alle erforderlichen Bearbeitungen mit verschiedenartigen Werkzeugen durchgeführt werden.

Dabei kann die Verschiebebahn als Schienenspur ausgebildet und die Werkzeugspindeleinheiten können mit auf dieser geführten Rollen versehen sein. Ferner ist es möglich, auf der Schienenspur besondere verfahrbare Roll-Container zur Aufnahme von Werkzeugspindeleinheiten anzuordnen, von denen sie dann in eine Bereitschaftsposition weggefördert, z.B. abgehoben werden. Auch kann die Verschiebebahn als Hängebahn ausgebildet sein, von welcher die Werkzeugspindeleinheiten in ihrer Bereitschaftsposition nach unten abgelassen werden.

In Abwandlung hiervon kann als Verschiebebahn auch ein Band- oder Plattenförderer dienen, auf den die Werkzeugspindeleinheiten abgelassen und von dem sie im Bereich Bereitschaftsposition abgehoben oder beiseite geschoben werden.

In bevorzugter Ausgestaltung ist die Verschiebebahn eine gleisartige Schienenspur, auf der die Werkzeugspindeleinheiten mittels Gleitmitteln oder Rollen leicht verfahrbar sind. Dabei kann nach einem weiteren Vorschlag die Verschiebebahn einen heb- und senkbaren Abschnitt unterhalb der Arbeitsposition der an der Ständerkonsole angeordneten Werkzeugspindeleinheit aufweisen. Dieser wird zur Übernahme der Werkzeugspindeleinheit unter dieser angehoben, so dass die Verbindung zur Ständerkonsole gelöst werden kann und die Werkzeugspindeleinheit auf der Verschiebebahn oder auf einem auf dieser verfahrbaren Roll-Container ruht. In Abwandlung hiervon kann erfindungsgemäss die Ständerkonsole oder deren Anschlusselement für die lösbare Verbindung mit der Werkzeugspindeleinheit aus der jeweiligen Arbeitsposition absenkbar ausgebildet sein, so dass die auszuwechselnde Werkzeugspindeleinheit auf die Verschiebebahn abgelassen werden und von dort aus weiterbewegt werden kann.

Je nach der gewählten Ausgestaltung der Verschiebebahn und deren Besonderheiten - wie erwähnt beispielsweise als Förderer oder als Hängebahn - genügt diese zur Aufnahme und zum Abtransport und zur Zuführung der jeweils auszuwechselnden Werkzeugspindeleinheiten, da diese mittels anderer, zusätzlicher Hebewerkzeuge oder Übernahmevorrichtungen in eine Bereitschaftsposition überführt werden können.

Bevorzugterweise ist erfindungsgemäss die Anordnung so vorgesehen, dass die (erste) Verschiebebahn an ihrem Ende eine Verzweigung oder eine Drehscheibe aufweist, an welche eine weitere (zweite) Verschiebebahn angeschlossen ist, die als Bereitschaftsposition für eine Mehrzahl von Werkzeugspindeleinheiten ausgebildet ist oder zu dieser hinführt, wobei eine besonders vorteilhafte Anordnung in der Weise getroffen werden kann, dass die erste Verschiebebahn geradlinig verläuft und die an ihrem Ende anschliessende rechtwinklig zu ihr verlaufend beidseitig sich erstreckende zweite Verschiebebahn als Bereitschaftsposition für eine Mehrzahl von Werkzeugspindeleinheiten ausgebildet ist. Auf diese Weise sind die in der Bereitschaftsposition vorgehaltenen Werkzeugspindeleinheiten mit unterschiedlichen Werkzeugaufnahmen bzw. Spindeln für verschieden grosse Werkzeuge jederzeit zugriffsbereit; es ist dann auch leicht möglich, die Werkzeugspindeln im Bedarfsfall auszutauschen oder sie mit Spezialaufnahmevorrichtungen für Sonderwerkzeuge zu versehen.

Weitere vorteilhafte Besonderheiten der erfindungsgemässen Vorrichtung sind noch darin zu sehen, dass die Werkzeugspindeleinheiten mit einem unmittelbar auf der Spindelwelle angeordneten Synchronläufermotor versehen sind die von einem Frequenzwandler drehzahlgeregelt sind. Ausserdem wird das Austauschen der Werkzeugspindeleinheiten noch dadurch besonsonders erleichtert, wenn nach einem weiteren Merkmal das Anschlusselement der Ständerkonsole und die Anschlussflächen der Werkzeugspindeleinheiten mit fernsteuerbar druckmittelbetätigbaren Pass- und Ankervorrichtungen und Schnellverbindungen für die Stromübertragung versehen sind.

Bei einem erfindungsgemäss gestalteten Bearbeitungszentrum gewährleisten das Werkzeugmagazin, die Werkzeugwechseleinrichtung und die Wechselvorrichtung für die Werkzeugspindeleinheiten eine automatische, der jeweiligen Bearbeitungsaufgabe entsprechende, weitgehend frei gestaltbare Werkzeugversorgung; es stellt somit die Basis für hohe Automatisierungsstufen dar.

Das folgende Ausführungsbeispiel der Erfindung lässt weitere vorteilhafte Merkmale und Besonderheiten erkennen, die anhand der Darstellung in den Zeichnungen im folgenden näher beschrieben und erläutert sind.

Es zeigen:
- Fig. 1: eine schematische Gesamt-Draufsicht auf ein hochautomatisiertes Bearbeitungszentrum mit den erfindungsgemässen Vorstellungen;
- Fig. 2: eine schematische Darstellung der Werkstück-Paletten-Wechselvorrichtung in Draufsicht;
- Fig. 3: eine Darstellung gemäss Fig. 2 in Blickrichtung auf die Zubringerschwenkasche und die Spindelachse der Werkzeugspindeleinheit;
- Fig. 4: eine Darstellung gemäss Fig. 3 in Blickrichtung auf die waagrechte Achse (x) des Palettenmagazins;
- Fig. 5: eine Darstellung gemäss Fig. 3 in einer abgewandelten Ausführung;
- Fig. 6: den Zubringer mit Kettenförderer;
- Fig. 7: den Zubringer mit einem Zahnstangenförderer;
- Fig. 8: den Zubringer mit einem Zahnstangenförderer in Draufsicht;
- Fig. 9: den Zubringer mit einem Zahnstangenförderer in abgewandelter Ausführung;
- Fig. 10: den Zubringer mit einem Zahnstangenförderer in abgewandelter Ausführung in Draufsicht;
- Fig. 11: den Zubringer mit einem Gewindespindel-Förderer;
- Fig. 12: den Zubringer gemäss Fig. 11 in Draufsicht;
- Fig. 13: den Zubringer mit einem Teleskopförderer;
- Fig. 14: den Zubringer gemäss Fig. 13 in Draufsicht;
- Fig. 15: die Festklemmvorrichtung für die Werkstück-Paletten;
- Fig. 16: die Festklemmvorrichtung gemäss Fig. 13 in einem Teilschnitt.

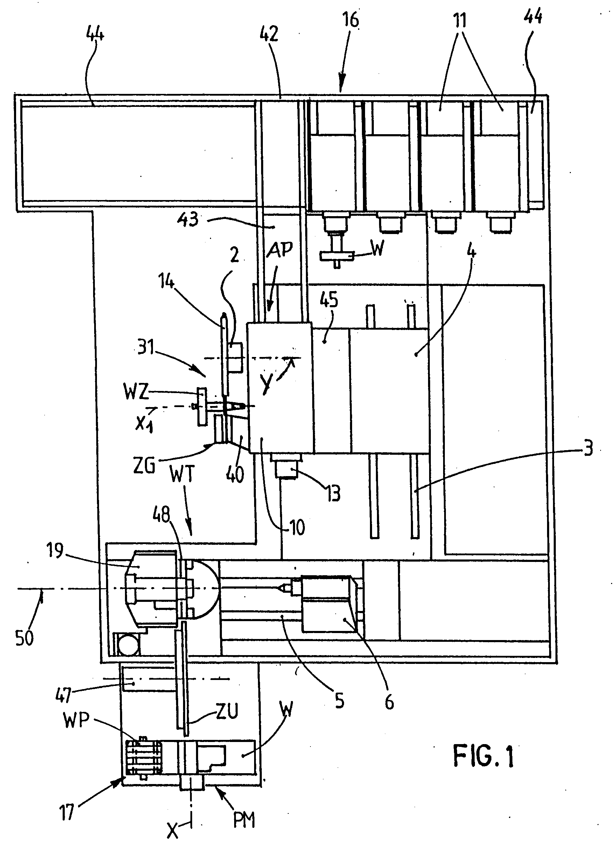

In Fig. 1 ist ein mittels der erfindungsgemässen Vorrichtungen geschaffenes, auf einer Maschinenfusseinheit 1 zusammengefasstes hochautomatisiertes Bearbeitungszentrum dargestellt. Dieses umfasst eine Werkzeugmagazin-Konsole 2 mit dem Werkzeugmagazin 14 und eine Ständerführungswange 3, auf dem die Ständerkonsole 4 verfahrbar ist. Ferner ist noch eine Reitstock-Führungswange 5 vorgesehen, durch die die Verfahrbarkeit des Reitstocks 6 ermöglicht wird. Mit 7 ist das automatische Werkstück-Paletten-Aufnahmegetriebe bezeichnet.

An der Ständerkonsole 4 ist ein vertikal verfahrbares Anschlusselement 45 mit der Anschlussfläche 46 zum Anschliessen der Werkzeugspindel-Einheit 10 vorgesehen.

Ferner ist in Figur 1 dargestellt, wie die in der Bereitschaftsposition 16 der Werkzeugspindeleinheit-Wechselvorrichtung vorgehaltene Werkzeugspindeleinheit 11 auf einer in Querrichtung R zur Spindelachse Z verlaufenden Führungsbahn 43 und 44 verschiebbar und in eine Wechselposition 42 auf eine zweite coaxial zur Spindelachse Z verlaufende zweite Führungsbahn 43 umsetzbar ist. Auf dieser ist die Werkzeugspindeleinheit 10 oder 11 bis zur Ständerkonsole 4 verfahr- und an die Anschlussfläche 46 anschliessbar. Diese Vorrichtung ermöglicht einen beliebigen Austausch der Werkzeugspindeleinheiten 10, 11 in der Ausgangsposition A.

Die Werkzeuge WZ werden in der Werkzeugmagazin 14 vorgehalten und mittels eines an der Konsole 40 angeordneten Zangengreifers ZG der Werkzeugwechselvorrichtung 31 in die Spindel 13 eingesetzt.

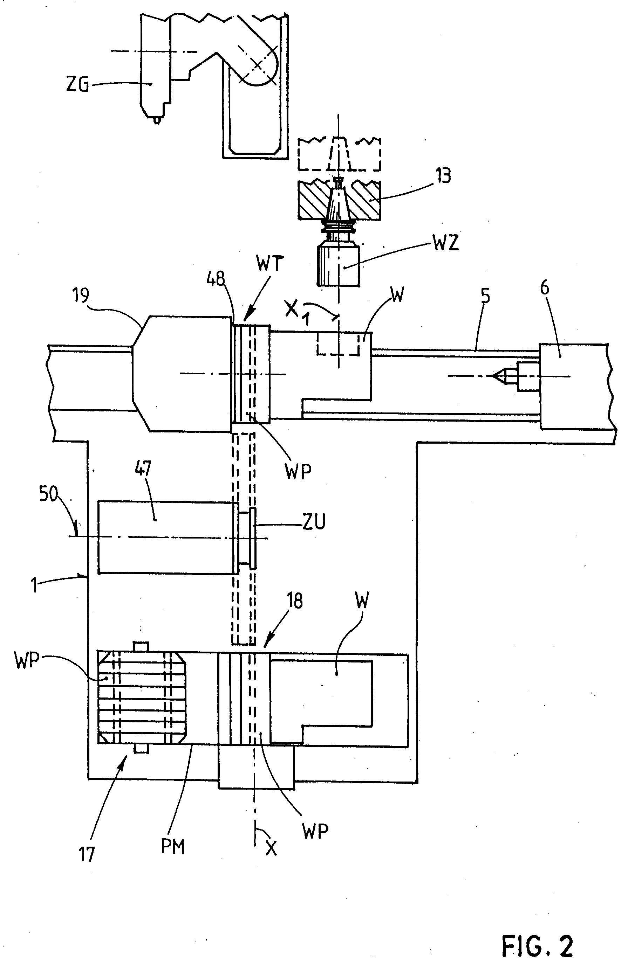

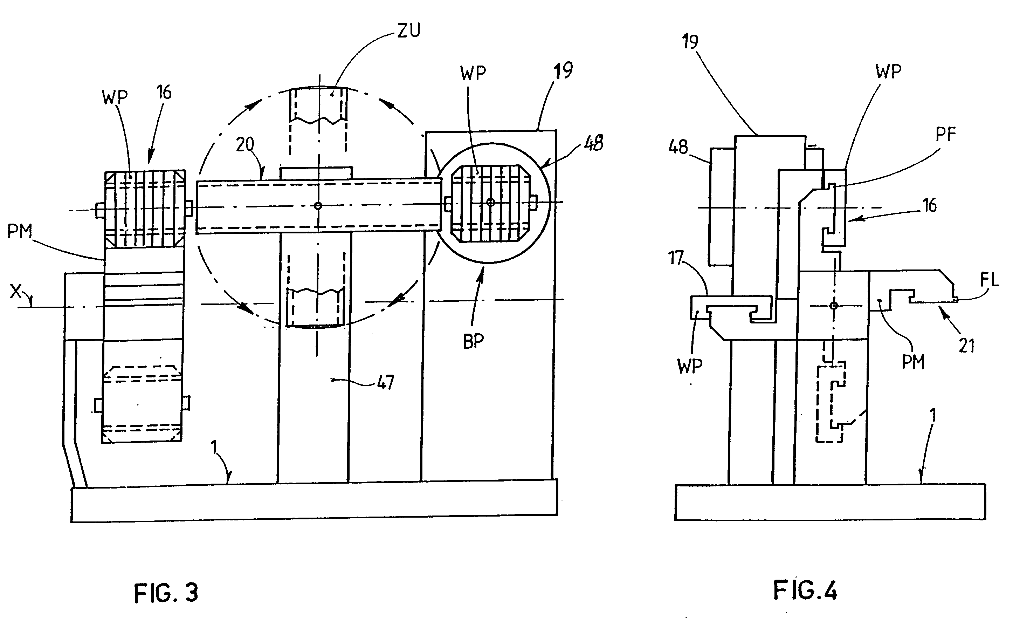

Wie aus Fig. 2 ersichtlich ist, kann der Zubringer ZU eine waagrechte (gestrichelt dargestellte) und eine senkrechte Stellung einnehmen; dabei ist er um die Schwenkachse 50 schwenkbar, die mit dem Schwenkantrieb im Ständergestell 47 angeordnet ist. In der waagrechten Stellung schliesst die nicht näher dargestellte Förderstrecke 20 beidseitig an die Führungsleisten FL der Palettenführungen PF des Werkstückträgers WT und des Palettenmagazins PM an, wie dies auch aus Fig. 3 ersichtlich ist. In Fig. 2 ist ferner der Aufspannplatz 17 der Werkzeug-Palette WP dargestellt, und ausserdem ist der Bereitstellungsplatz 18 zu ersehen, in welchem die Werkstück-Palette WP senkrecht steht und in der Palettenführung PF gehalten ist, die mit der Förderstrecke 20 des Zubringers fluchtet.

Aus den Fig. 3 und 4 sind weitere Einzelheiten der zusammenwirkenden Aggregate ersichtlich, und zwar das um die waagrechte Achse X schwenkbare Palettenmagazin mit einer Werkstück-Palette WP auf dem Aufspannplatz 17 und einer weiteren Werkstück-Palette WP in der Bereitschaftsposition 16, gehalten in der Palettenführung PF. Mit 19 ist die Werkzeugträger-Einheit bezeichnet, die im Ausführungsbeispiel mit einem Drehantrieb 48 versehen ist, so dass ein axialzentriertes Werkstück in Drehbewegung bearbeitet werden kann. Der Zubringer ZU mit der Förderstrecke 20 ist um die waagrechte Achse X schwenkbar am Ständergestellt 47 gelagert.

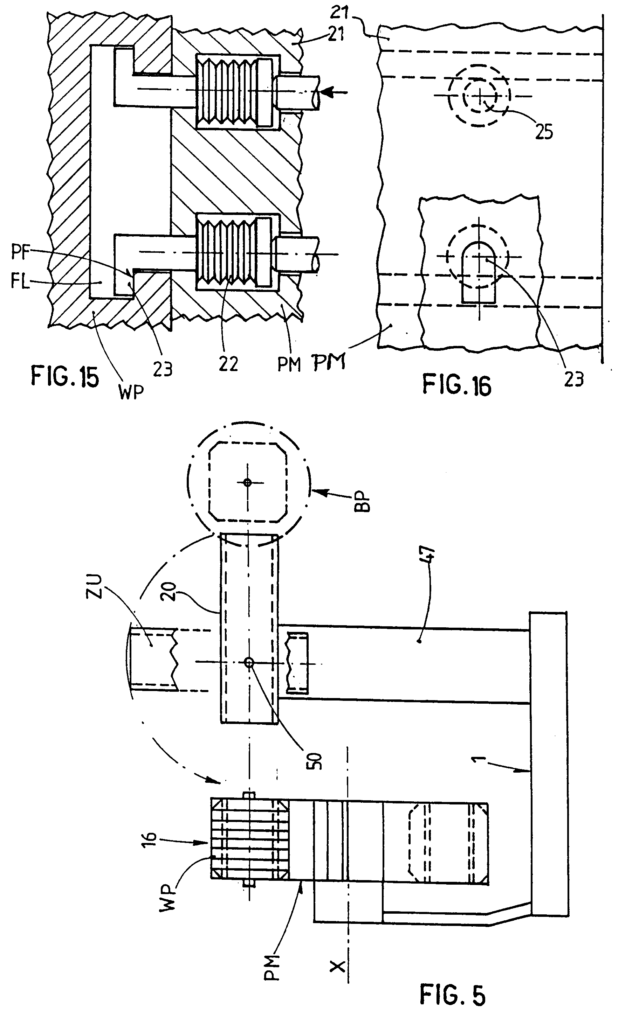

Die Fig. 5 zeigt weitgehend übereinstimmend die Ausbildungsweise gemäss Fig. 3 mit dem Unterschied, dass der Zubringer ZU einen längeren und einen kürzeren Arm hat. Diese Ausführung ist dann geboten, wenn die (in Fig. 3, 4 und 5) nicht dargestellte Reitstock-Führungswange 5 zu hoch liegt, um ein Durchschwenken des Zubringers zu ermöglichen. In diesem Fall kann der Zubringer ZU keinen Vollkreis um 360° oder zweimal 180° fahren, so dass der Werkstückwechsel zwei getrennte aufeinanderfolgende Operationen erfordert. Zunächst muss die Werkstück-Palette WP vom Werkzeugträger WT - gestrichelt dargestellt - vom Zubringer ZU aufgenommen und durch Schwenken um 180° - siehe Pfeilrichtung - auf einen freien Bereitschaftspositionsplatz 16 des Palettenmagazins PM gefördert und abgestellt werden. Darauf wird das Palettenmagazin um 90° oder 180° geschwenkt und eine beladene Werkstück-Palette WP wird in die Bereitschaftsposition 16 gebracht, so dass sie vom Förderer 20 des Zubringers ZU entnommen und durch Schwenken um 180° dem Werkstückträger WT übergeben werden kann.

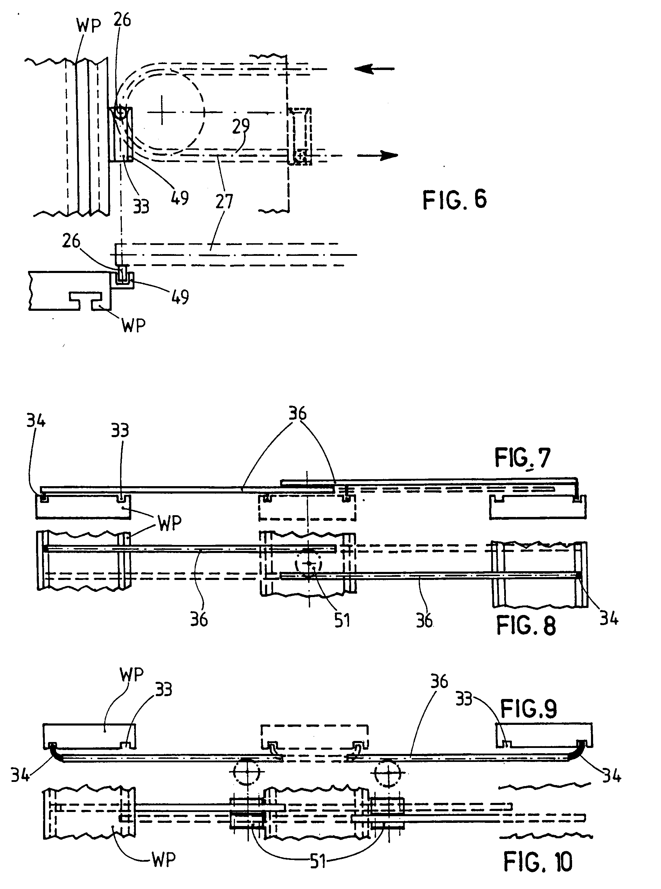

In Fig. 6 ist eine Seite des Zubringers ZU mit dem Kettenförderer 27 dargesellt, bei dem die Förderkette 29 über ein Antriebsritzel 30 geführt ist. Die Förderkette 29 ist mit einem Mitnahmeorgan 26 - als Stift ausgebildet - ausgerüstet, das - wie dargestellt - in die Ausnehmung 33 an dem seitlichen Ohr 49 der Werkstück-Palettte WP eingreift und dadurch die Werkstück-Palette WP in die gestrichelte Stellung fördert.

Die Fig. 7 und 8 zeigen eine Ausführungsmöglichkeit des Zubringers ZU mit einem Zahnstangenförderer, der im wesentlichen aus den beiden Zahnstangen 36 besteht, die von einem gemeinsamen oder zwei getrennten Antriebsritzeln 51 angetrieben sein können. Die Zahnstangenhübe sind so ausgelegt, dass die Mitnahmeorgane 34 die Werkstück-Palette WP bis zur Mitte fördern und dann aus- bzw. eingeklinkt werden, um den anschliessenden Folgehub in die jeweilige andere Endlage ausführen zu können.

Eine abgewandelte Zahnstangenausführung der Förderstrecke 20 des Zubringers ZU ist aus den Fig. 9 und 10 ersichtlich. Dort ist jede der Zahnstangen 36 durch zwei getrennte Antriebsritzel 51 angetrieben, die aus Raumgründen aus der Mitte versetzt sind. Dadurch können die Zahnstangen 36 näher zusammengerückt werden. Diese sind ebenfalls mit den Mitnahmeorgangen 34 versehen, welche in Ausnehmungen 33 der Werkstück-Paletten WP eingreifen.

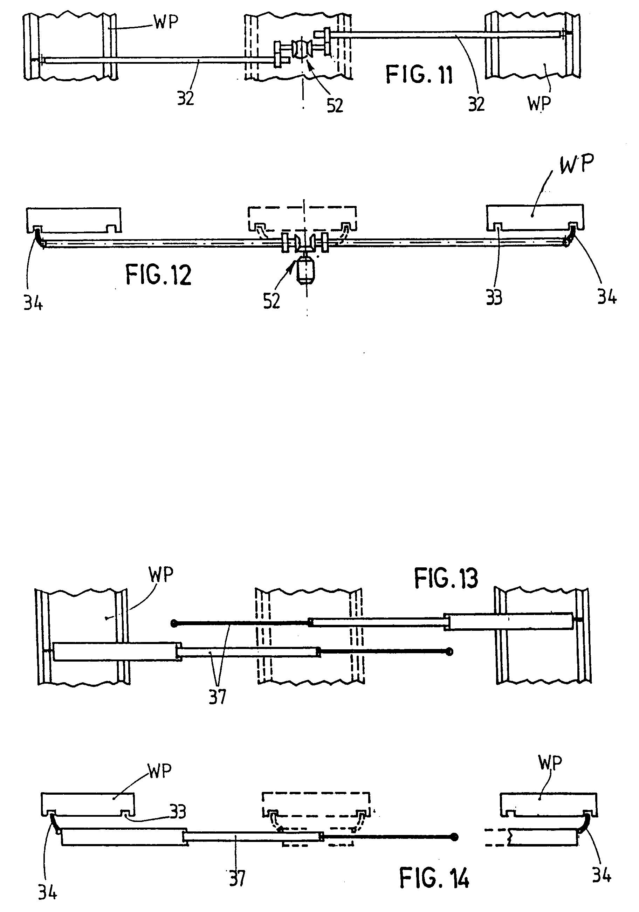

Die Fig. 11 und 12 zeigen eine Fördererausbildung des Zubringers ZU mittels Gewindespindeln 32, die durch ein zentrales Getriebe 52 angetrieben sind und an ihren Enden Mitnahmeorgange 34 aufweisen, mit denen sie in die entsprechenden Ausnehmungen 33 der Werkstück-Paletten zuerst bis zur Mitte von einer Zahnstange gefördert und dann von der anderen Zahnstange übernommen werden, durch welche der Resthub ausgeführt wird.

Schliesslich ist als schematisches Ausführungsbeispiel noch eine Ausführungsform mit teleskopierbaren Stäben 37 in den Fig. 13 und 14 dargestellt. Diese Ausführung hat den Vorteil geringen Platzbedarfs, weil das eigentliche Antriebsaggregat ausserhalb der Vorrichtung als Druckmittelerzeuger bzw. Druckmittelsteuervorrichtung angeordnet ist und lediglich flexible Verbindungsschläuche zu den Teleskopstäben 37 vorhanden sind.

Aus den Fig. 15 und 16 ist ein Beispiel ersichtlich, wie die Klemmpratzen 23 unter der Wirkung der Druckfedern 22 - hier als Tellerfedern ausgebildet - auf die Flächen der Palettenführungen PF angepresst werden. Zum Lösen der Klemmwirkung sind die Stössel 25 angeordnet, die in nicht dargestellter Weise mittels Hebelwirkung durch die Schwenkbewegung des Zubringers ZU in der Weise angetrieben sind, dass sie in der jeweiligen Wechselstellung die Freigabe der zu wechselnden Werkstück-Paletten ermöglichen.

## Patentansprüche

1. Vorrichtung zur spangebenden Metallbearbeitung jeweils eines von mehreren auf Werkstück-Paletten (WP) eines Palettenmagazins (PM) aufspannbaren, in die Bearbeitungsposition (BP) zugeführten Werkstücks (W) mit
a. einer Steuervorrichtung zur getakteten Folgesteuerung
für die Zuführung der vorgewählten mit dem Werkstück beladenen Werkstück-Palette (WP) vom Bereitstellungsplatz (18) zur Bearbeitungsposition (BP) im Bereich einer Werkzeugpinole (13),
b. für eine Werkzeugspindeleinheit-Wechselvorrichtung zur Bereitstellung einer vorgewählten Werkzeugspindeleinheit (10) mit der Pinole (13) in ihrer Arbeitsposition (AP), und für
c. eine Werkzeugwechselvorrichtung (14, 31) zur Bereitstellung und Zuführung des vorgewählten Bohr-, Fräs- oder Schleifwerkzeugs (WZ) aus einem Werkzeugmagazin (14) in die Pinole (13) der vorgewählten Werkzeugspindeleinheit (10),
d. einschliesslich der gesteuerten Zuführungsmittel, der Werkzeugspindeleinheit-Wechselvorrichtung und der Werkzeugwechselvorrichtung,
gekennzeichnet durch
d.1 ein um eine waagrechte Achse (x) um 180° schwenkbares Palettenmagazin (PM) für wenigstens zwei Werkstück-Paletten (WP) mit wenigstens einem in vertikaler Ebene sich erstreckend angeordneten Bereitstellungsplatz (18) sowie einem horizontalen Aufspannplatz für eine Werkstück-Palette (WP), und
d.2 einen um eine horizontale Achse (x) um 180° schwenkbaren Zubringer (ZU) mit einer Förderstecke (20) für wenigstens eine beladene Werkstück-Palette (WP) vom Bereitstellungsplatz (18) in die Bearbeitungsposition (BP) des Werkstückträgers (WT), die an den Bereitstellungsplatz (18) einerseits und die Bearbeitungsposition (BP) des Werkstückträgers (WT) andererseits anschliessbar ist, und
d.3 eine erste Verschiebebahn (43) für die von der Ständerkonsole (4) aus ihrer Arbeitsposition (AP) lösbare Werkzeugspindeleinheit (10), die mit einer zweiten Verschiebebahn (44) in Verbindung steht und als Bereitschaftsposition (16) für eine Mehrzahl von Werkzeugspindeleinheiten (10, 11) dient sowie
d.4 ein um eine waagrechte Achse (Y) drehbares Werkzeugmagazin (14) mit in waagrechten Achsen (x1) gehaltenen Werkzeugen (WZ), die mittels eines um wenigstens einen Hubschritt horizontal verfahrbaren Doppelzangengreifer (ZG) entnehmbar und der Pinole (13) der in Arbeitsposition befindlichen Werkzeugspindeleinheit (10) zuführbar sind.

2. Vorrichtung nach Anspruch 1, dadurch gekennzeichnet, dass das Paletten-Magazin (PM) in der Anzahl der Beladeplätze (21) entsprechenden Zahl von Schwenkstellungen arretierbar ist, und dass die Beladeplätze (21) des Paletten-Magazins (PM) und/oder die Werkstück-Paletten (WP) und der Zubringer (ZU) sowie der Werkstückträger (WT) mit Halterungselementen (39) versehen sind, mittels welchen die Werkstück-Paletten (WP) auf den Beladeplätzen (21) dem Zubringer (ZU) und dem Werkstückträger (WT) justiert arretierbar sind.

3. Vorrichtung nach Anspruch 2 dadurch gekennzeichnet, dass die Beladeplätze (21) mit Führungsleisten (FL) entsprechend den standardisierten Werkstück-Paletten (WP) und mit auf die Palettenführungen (PF) unter Federdruckwirkung (22) anpressbaren Klemmpratzen (23) versehen sind.

4. Vorrichtung nach Anspruch 3, dadurch gekennzeichnet, dass die Klemmung der standardisierten Werkstück-Paletten (WP) in den Führungsleisten (FL) der Beladeplätze (21) nur in einer den Palettenwechsel ermöglichenden Schwenkstellung des Zubringers (ZU) mittels eines entgegen dem Federdruck (22) durch einen vom Zubringer-Schwenkantrieb (24) angetriebenen und mit diesem verriegelten Stössel (25) lösbar ist.

5. Vorrichtung nach Anspruch 2, dadurch gekennzeichnet, dass der um eine horizontale Achse (50) schwenkbare Zubringer (ZU) als Förderstrecke (20) für die Werkstück-Palette (WP) ausgebildet ist.

6. Vorrichtung nach Anspruch 4, dadurch gekennzeichnet, dass die standardisierten Werkstück-Paletten (WP) mit Ausnehmungen (33) und die Förderstrecke (20) mit in diese eingreifenden Mitnahmeorganen (26) zum Erfassen und Weiterfördern der im Bereitstellungsplatz (18) des Paletten-Magazins (PM) und in der Bearbeitsposition (BP) des Werkstückträgers (WT) bereitstehenden Werkstück-Paletten (WP) versehen sind.

7. Vorrichtung nach den Ansprüchen 1 und/oder 5, dadurch gekennzeichnet, dass die Förderstrecke (20) als Kettenförderer (27) ausgebildet ist.

8. Vorrichtung nach Anspruch 7, dadurch gekennzeichnet, dass der Antriebsstrang des Kettenförderers (27) aus dem Kettenförderer-Antriebsmotor (28) und einer in der horizontalen Schwenkachse (50) des Zubringers (ZU) angeordnete Antriebswelle (38) und einem auf dieser befestigte in die Förderkette (29) eingreifendes Antriebsritzel (30) ausgebildet ist.

9. Vorrichtung nach den Ansprüchen 1 und/oder 5, dadurch gekennzeichnet, dass die Förderstrecke (20) aus zwei parallel angeordneten Gewindespindeln (32) besteht, deren Gewindemuttern (35) in Ausnehmungen (33) der Werkstück-Paletten (WP) eingreifende Mitnahmeorgane (34) aufweisen.

10. Vorrichtung nach Anspruch 9, dadurch gekennzeichnet, dass die Gewindespindeln (32) mit Rechts- und Linksgewinde versehen und/oder gegenläufig angetrieben sind.

11. Vorrichtung nach den Ansprüchen 1 und/oder 5, dadurch gekennzeichnet, die Förderstrecke (20) aus zwei gegenläufig bewegbar angetriebenen, an ihren beidseitig ausfahrbaren Enden Mitnahmeorgane (34) aufweisenden Zahnstangen (36) gebildet ist, und die Mitnahmeorgane (34) zum beidseitigen gleichzeitigen Eingriff in die Ausnehmungen (33) der Werkstück-Paletten (WP) auf der Bereitstellungsplatz-Seite und der Werkstückträger-Seite ausgebildet sind.

12. Vorrichtung nach den Ansprüchen 1 und/oder 5, dadurch gekennzeichnet, dass die Förderstrecke (20) aus zwei gegenläufig angetriebenen, teleskopierbaren Stäben (37) gebildet ist, an deren beidseitig ausfahrbaren Enden Mitnahmeorgane (34) zum gleichzeitigen beidseitigen Eingriff in die Ausnehmungen (33) der Werkstückpaletten (WP) auf der Bereitstellungsplatz-Seite und der Werkstückträger-Seite vorgesehen sind.

13. Vorrichtung nach Anspruch 1, dadurch gekennzeichnet, dass die Werkzeugspindeleinheit-Wechselvorrichtung eine vertikale, auf einer gemeinsamen Maschinenfuss-Einheit (1) angeordnete Ständerkonsole (4) und diese eine mit ihr verbundene, betriebsmässig lös- und auswechselbare Werkzeugspindeleinheit (10) sowie eine auf der Ständerkonsole (4) angeordnete, zum richtungsgeführten Wegschieben der von der Ständerkonsole (4) gelösten Werkzeugspindeleinheit (10) aus ihrer Arbeitsposition (AP) in eine im Abstand von dieser eingerichtete Bereitschaftsposition (16) ausgebildete (erste) Verschiebebahn (43) aufweist.

14. Vorrichtung nach Anspruch 13, dadurch gekennzeichnet, dass die (erste) Verschiebebahn (43) einen heb- und senkbaren Abschnitt unterhalb der in Arbeitsposition (AP) befindlichen Werkzeugspindeleinheit (10) aufweist.

15. Vorrichtung nach Anspruch 13, dadurch gekennzeichnet, dass die Ständerkonsole (4) oder deren Anschlusselement (45) für die lösbare Verbindung mit der Werkzeugspindel einheit (10) aus der jeweiligen Arbeitsposition (AP) absenkbar ausgebildet ist.

16. Vorrichtung nach Anspruch 13, dadurch gekennzeichnet, dass die (erste) Verschiebebahn (43) an ihrem Ende eine Verzweigung oder eine Drehscheibe (42) aufweist, an welche eine weitere (zweite) Verschiebebahn (44) angeschlossen ist, die als Bereitschaftsposition (16) für eine Mehrzahl von Werkzeugspindeleinheiten (10,11) ausgebildet ist oder zu dieser hinführt.

17. Vorrichtung nach Anspruch 15, dadurch gekennzeichnet, dass die (erste) Verschiebebahn (43) geradlinig verläuft und die an ihrem Ende anschliessende rechtwinklig zu ihr verlaufend beidseitig sich erstreckende zweite Verschiebebahn (44) als Bereitschaftsposition (16) für eine Mehrzahl von Werkzeugspindeleinheiten (10,11) ausgebildet ist.

18. Vorrichtung nach Anspruch 13, dadurch gekennzeichnet, dass die Werkzeugspindeleinheiten (10) mit einem unmittelbar auf der Spindelwelle angeordneten Synchronläufermotor versehen sind.

19. Vorrichtung nach Anspruch 18, dadurch gekennzeichnet, dass der Frequenzgenerator für den Synchronläufermotor im Bereich des Anschlusselements (45) der Ständerkonsole (4) zur lösbaren Verbindung mit der in Arbeitsposition (AP) befindlichen Werkzeugspindeleinheit (10) in oder an der Ständerkonsole (4) angeordnet ist.

20. Vorrichtung nach Anspruch 13, dadurch gekennzeichnet, dass das Anschlusselement (45) der Ständerkonsole (4) und die Anschlussflächen (46) der Werkzeugspindeleinheiten (10) mit fernsteuerbar druckmittelbetätigbaren Pass- und Ankervorrichtungen und Schnellverbindungen für die Stromübertragung versehen sind.

21. Vorrichtung nach Anspruch 20, dadurch gekennzeichnet, dass das Anschlusselement (45) gegenüber der Ständerkonsole (4) heb- und senkbar ausgebildet ist.

22. Vorrichtung nach Anspruch 21, dadurch gekennzeichnet, dass das Anschlusselement (45) im Bereich der Anschlussfläche (46) mit Schwalbenschwanz- oder T-Nuten zur Aufnahme der entsprechenden Passleisten der Werkzeugspindeleinheiten (10) ausgerüstet sind.

23. Vorrichtung nach Anspruch 1, dadurch gekennzeichnet, dass die im Werkzeugmagazin (14) in waagrechten Achsen (X₁) gehaltenen Werkzeuge (WZ) mittels eines Doppelzangengreifers (ZG) entnehmbar sind, der um eine horizontale Achse (v) schwenkbar und an einer mittels eines Kraftantriebs um eine vertikale Achse (w) drehbaren Konsole angeordnet und in Richtung parallel zur Werkzeugaufnahme- bzw. Spindelachse (Z) auf einer Führungsbahn (41) um wenigstens einen Hubschritt vor- und rückwärts verfahrbar ist.

24. Vorrichtung nach Anspruch 23, dadurch gekennzeichnet, dass durch den Doppelzangengreifer (ZG) in der Ausgangslage ein im Werkzeugmagazin (14) vorhandenes erstes Werkzeug durch die erste Zange erfassbar und durch Verfahren um einen (ersten) Hubschritt und Drehen der Konsole (40) um 90° um eine vertikale Achse mittels der zweiten Zange ein in der Pinole (13) vorhandenes zweites Werkzeug erfass- und durch einen Rückhubschritt (R) der Werkzeugspindeleinheit (10) aus der Pinole (13) herausziehbar, und dass danach durch Schwenken des Zangengreifers (ZG) um 180° um die horizontale Achse (x₁) das erste Werkzeug vor die Pinole (13) bring- und durch Ausführung eines - weiteren - Reversier-Rückhubschritts in die Pinole (13) einführbar und darauf durch Zurückdrehen der Konsole (40) um 90° um die vertikale Achse und Verfahren um den Reversier-Hubschritt in die Ausgangslage verfahrbar ist, in welcher das zweite Werkzeug in das Werkzeugmagazin (14) einsetzbar ist.

25. Vorrichtung nach Anspruch 24, dadurch gekennzeichnet, dass durch den Doppelzangengreifer (ZG) in der Ausgangsposition ein im Werkzeugmagazin (14) vorhandenes erstes Werkzeug durch die erste Zange erfassbar und durch Verfahren um einen ersten Hubschritt und Drehen der Konsole (40) um 90° um die vertikale Achse (w) mittels der zweiten Zange (Z 2) ein in der Pinole vorhandenes zweites Werkzeug erfass- und durch einen zweiten Hubschritt aus der Pinole (13) herausziehbar, und dass danach durch Schwenken des Zangengreifers (ZG) um 180° um die horizontale Achse (x₁) das erste Werkzeug (WZ 1) vor die Pinole (13) bring- und durch Ausführung eines - dritten - Reversier-Hubschritts (H 3) in die Pinole (13) einführbar und darauf durch Zurückdrehen der Konsole (40) um 90° um die vertikale Achse und Verfahren um den Reversier-Hubschritt in die Ausgangslage verfahrbar ist, in welcher das zweite Werkzeug in das Werkzeugmagazin (14) einsetzbar ist.

26. Vorrichtung nach Anspruch 25, dadurch gekennzeichnet, dass durch den Zangengreifer (ZG) in der Ausgangslage ein im Werkzeugmagazin (14) vorhandenes erstes Werkzeug durch die erste Zange erfassbar und durch Verfahren um ein ersten Hubschritt und Schwenken um 90° um die horizontale Achse (x₁) sowie durch Drehen der Konsole (40) um 90° um die vertikale Achse und Zurückschwenken des Zangengreifers (ZG) um 90° um die horizontale Achse mittels der zweiten Zange ein in der Pinole (13) vorhandenes zweites Werkzeug erfass- und durch einen zweiten Hubschritt aus der Pinole (13) herausziehbar, und dass danach durch Schwenken des Zangengreifers (ZG) um 180° um die horizontale Achse (x₁) das erste Werkzeug vor die Pinole (13) bring- und durch Ausführung eines - dritten - Reversier-Hubschritts in die Pinole (13) einführbar und danach durch Schwenken des Zangengreifers (ZG) um 90° um die horizontale Achse (x₁) und Zurückdrehen der Konsole (40) um 90° um die vertikale Achse, Zurückschwenken des Zangengreifer (ZG) um 90° um die horizontale Achse (x₁) und Verfahren um den Reversier-Hubschritt in die Ausgangslage verfahrbar ist, in welcher das zweite Werkzeug in das Werkzeugmagazin (14) einsetzbar ist.

## Claims

1. Device for cutting metal machining of one each of several workpieces (W) which can be clamped onto work pallets (WP) of a pallet hopper (PM) and supplied to the machining position (BP), comprising
a. a control device for the clocked sequencing
of the supply of the preselected work pallet (WP), loaded with the workpiece, from the ready position (18) to the machining position (BP), within the sphere of a tool sleeve (13),
b. of a changer for a tool spindle unit making available a preselected tool spindle unit (10), with the sleeve (13) in its working position (AP), and
c. of a tool changer (14, 31) making available and feeding the preselected drilling, milling or grinding tool (WZ) from a tool hopper (14) into the sleeve (13) of the tool spindle unit (10) preset,
d. including the controlled feeders, the changer for the tool spindle unit and the tool changer,
characterized by
d.1 a pallet hopper (PM) for at least two work pallets (WP), rotatable around a horizontal axis (x) by 180°, having one or more ready stations (18) extending in a vertical plane as well as one horizontal clamping station for a work pallet (WP), and
d.2 a feeder (ZU) swivelling around a horizontal axis (x) by 180° with a conveying path (20) for at least one loaded work pallet (WP) from the ready station (18) into the machining position (BP) of the work carrier (WT) which, on the one hand, is linkable to the ready station (18) and, on the other, to the machining position (BP) of the work carrier (WT), and
d.3 a first shifting path (43) for the tool spindle unit (10), detachable from its working position (AP) on the column-type bracket (4), which has been linked to a second shifting path (44), serving as a ready position (16) for several tool spindle units (10, 11), as well as
d.4 a tool hopper (14), turnable around a horizontal axis (Y), with tools (WZ) held in horizontal axes (x1), removable by a double tong gripper (ZG), which can horizontally be dispaced by at least one stroke step, and feedable to the sleeve (13) of the tool spindle unit (10) to be found in the working position.

2. Device according to claim 1, characterized in that the pallet hopper (PM) can be locked in a number of swivelling positions corresponding to that of the loading stations (21), and further that the loading stations (21) of the pallet hopper (PM) and/or the work pallets (WP) and the feeder (ZU) as well as the work carrier (WT) have been provided with fixing elements (39) for an adjusted locking of the work pallets (WP) onto the loading stations (21), onto the feeder (ZU) and onto the work carrier (WT).

3. Device according to claim 2, characterized in that the loading stations (21) have been equipped with guide beads (FL) corresponding to the standardized work pallets (WP), and with clamping claws (23) pressing against the pallet guides (PF) by action of the spring pressure (22).

4. Device according to claim 3, characterized in that the clamping of the standardized work pallets (WP) within the guide beads (FL) of the loading stations (21) can only be released in such a pivoting position of the feeder (ZU) in which the change of the pallet will be possible, viz. by means of a slide (25) driven, opposed to the spring pressure (22), by the swing actuator of the feeder and locked with said actuator.

5. Device according to claim 2, characterized in that the feeder (ZU) pivoting around a horizontal axis (50) has been designed as a conveying path (20) for the work pallet (WP).

6. Device according to claim 4, characterized in that the standardized work pallets (WP) have been provided with recesses (33) and the conveying path (20) with driving elements (26) to mesh with these recesses in order to catch and to carry on the work pallets (WP) available in the ready station (18) of the pallet hopper (PM) and in the machining position (BP) of the work carrier (WT).

7. Device according to the claims 1 and/or 5, characterized in that the conveying path (20) has been designed as a chain conveyor (27).

8. Device according to claim 7, characterized in that the driving system of the chain conveyor (27) comprises the driving motor (28), a driving shaft (38), arranged in a horizontal pivoting axis (50) of the feeder (ZU), and a driving pinion (30), fixed on this shaft and engaging with the conveyor chain (29).

9. Device according to the claims 1 and/or 5, characterized in that the conveying path (20) consists of two parallel threaded spindles (32) of which the nuts (35) show some driving elements (34) which mesh with the recesses (33) of the work pallets (WP).

10. Device according to claim 9, characterized in that the threaded spindles (32) have been provided with right- and left-handed thread and/or they are driven in counter-rotation.

11. Device according to the claims 1 and/or 5, characterized in that the conveying path (20) comprises two counter-acting racks of which the ends, extensible at both sides, have been fitted with driving elements (34) designed for the double-sided and simultaneous engagement with the recesses (33) of the work pallets (WP) at the side of the ready station and at the side of the work carrier.

12. Device according to the claims 1 and/or 5, characterized in that the conveying path (20) comprises two telescopic rods driven in opposite direction, and at their ends, extensible at both sides, some driving elements (34) have been provided in order to mesh, at both sides and simultaneously, with the recesses (33) of the work pallets (WP) at the side of the ready station and that of the work carrier.

13. Device according to claim 1, characterized in that the changer for the tool spindle unit has been equipped with a vertical column-type bracket (4) arranged on a common machine base unit (1), and this bracket shows a tool spindle unit (10) linked to the latter but detachable and interchangeable according to the operational requirements as well as a (first) shifting path (43) arranged on the column-type bracket (4) and designed for the directed displacement of the loosened tool spindle unit (10) from its working position (AP) to a ready position (16) which has been provided at a certain distance from the latter.

14. Device according to claim 13, characterized in that the (first) shifting path (43) has been fitted with a lifting/lowering section located below the tool spindle unit (10) being in its working position (AP).

15. Device according to claim 13, characterized in that the column-type bracket (4) or its link (45) for the detachable connection with the tool spindle unit (10) has been developed in such a way that it can be lowered from the respective working position (AP).

16. Device according to claim 13, characterized in that the (first) shifting path (43) has been provided, at its end, with a branching or a turntable (42) meeting a further (second) shifting path (44) designed as a ready position (16) for several tool spindle units (10, 11) or leading to same.

17. Device according to claim 15, characterized in that the (first) shifting path (43) is a rectilinear device and its end has been linked to a second shifting path (44) designed as a ready position (16) for several tool spindle units (10, 11), said path being at right angles to the first one and extending at both sides.

18. Device according to claim 13, characterized in that the synchronous motor of the tool spindle units (10) has been arranged directly on the spindle shaft.

19. Device according to claim 18, characterized in that the frequency converter for the synchronous motor has been located inside or outside of the column-type bracket (4) viz. in the sphere of the link (45) of the column-type bracket (4) for the detachable connection of the tool spindle unit (10) to be found in the working position (AP).

20. Device according to claim 13, characterized in that the link (45) of the column-type bracket (4) and the joining surfaces (46) of the tool spindle units (10) have been equipped with fitting elements and anchoring devices suitable for remote control and operation by compressed air or oil, also comprising some rapid connections for the power transmission.

21. Device according to claim 20, characterized in that the link (45) has been designed lift- and lowerable, as referred to the column-type bracket (4).

22. Device according to claim 21, characterized in that the link (45) has, in the sphere of the joining surface (46), been provided with dovetailed or T-shaped grooves to receive the corresponding fitting strips of the tool spindle units (10).

23. Device according to claim 1, characterized in that the tools (WZ) held in horizontal axes (x1) within the tool hopper (14) can be removed by means of a double tong gripper (ZG) pivoting around a horizontal axis (v) and arranged on a bracket rotating by power drive around a vertical axis (w), this gripper being displaceable on a guideway (41) by at least one stroke step (forward/backward) parallel to the tool holding or spindle axis (Z).

24. Device according to claim 23, characterized in that in the starting position and by means of the double tong gripper (ZG), a first tool available in the tool hopper (14) can be seized by the first tong and, by displacement by a (first) stroke step and rotation of the bracket (40) by 90° around a vertical axis, a second tool being in the sleeve (13) is seizable by the second tong and removable from the sleeve (13) by a return stroke step (R) of the tool spindle unit (10), and that thereafter, by pivoting the tong gripper (ZG) by 180° around the horizontal axis (x1), the first tool can be brought in front of the sleeve (13) and, by performing a further return stroke step, it can be inserted into the sleeve (13) and the device can then be moved into the starting position by returning the bracket (40) by 90° around the vertical axis and by displacement by the reversing stroke step, and in this position, the second tool can be placed into the tool hopper (14).

25. Device according to claim 24, characterized in that in the starting position and by the double tong gripper (ZG), a first tool located in the tool hopper (14) can be caught by the first tong and, by displacement by a first stroke step and rotation of the bracket (40) by 90° around the vertical axis (w), a second tool available in the sleeve becomes seizable by the second tong (Z2) and removable from the sleeve (13) by a second stroke step, and that thereafter, by swivelling the tong gripper (ZG) by 180° around the horizontal axis (x1), the first tool (WZ1) can be transported in front of the sleeve (13) and fed into the latter by executing a third reversing stroke step (H3) and then, the device can be returned to the starting position by backward rotation of the bracket (40) by 90° around the vertical axis and displacement by the reversing stroke step, where the second tool is insertable into the tool hopper (14).

26. Device according to claim 25, characterized in that in the starting position, a first tool available in the tool hopper (14) is seizable by the first tong of the tong gripper (ZG) and by shifting by a first stroke step and pivoting by 90° around the horizontal axis (x1) as well as by turning the bracket (40) by 90° around the vertical axis and return rotation of the tong gripper (ZG) by 90° around the horizontal axis, a second tool mounted into the sleeve (13) can be seized by means of the second tong and pulled out of the sleeve (13) by a second stroke step, and that thereafter, by pivoting the tong gripper (ZG) by 180° around the horizontal axis (x1), the first tool can be brought before the sleeve (13) and fed into same by a third reversing stroke step, and that thereafter, by pivoting the tong gripper (ZG) by 90° around the horizontal axis (x1), by returning the bracket (40) by 90° around the vertical axis, by swivelling the tong gripper (ZG) backward by 90° around the horizontal axis (x1) and by displacement by the reversing stroke step, the device can be displaced to the starting position in which the second tool is chargeable into the tool hopper (14).

## Revendications

1. Dispositif pour l'usinage de métaux par enlèvement de copeaux de chaque fois une de plusieurs pièces à travailler (W) transportée à la position d'usinage (BP), pièces qui pourront se fixer sur des palettes à pièce (WP) d'un magasin à palettes (PM), comportant
a. un dispositif de commande pour le contrôle de séquence rythmé
pour l'alimentation de la palette (WP) présélectionnée et chargée de la pièce à travailler à partir du poste d'attente (18) à la position d'usinage (BP) dans le domaine d'une douille à pièce (13),
b. pour un changeur d'ensemble de broche à outil destiné à la mise à disposition d'un ensemble de broche à outil présélectionné (10) avec la douille (13) en position de travail (AP), et pour
c. un changeur d'outil (14, 31) pour la mise à disposition et alimentation de l'outil de perçage, de fraisage ou d'affûtage présélectionné (WZ) à partir d'un magasin à outils (14) à la douille (13) de l'ensemble à broche d'outil présélectionné (10),
d. y compris les moyens d'alimentation commandés, le changeur d'ensemble de broche à outil et le changeur d'outil,
**caractérisé par**
d.1 un magasin à palettes (PM) pivotant autour de l'axe horizontal (x) par 180° recevant au moins deux palettes à pièce (WP) avec un ou plusieurs postes d'attente (18) s'étendant sur un plan vertical, ainsi qu'un poste de serrage horizontal pour une palette à pièce (WP), et
d.2 un dispositif d'amenée (ZU) pivotant autour d'un axe horizontal (x) par 180° avec une voie de transport (20) pour un ou plusieurs palettes à pièce (WP) chargées, s'étendant du poste d'attente (18) dans la position d'usinage (BP) du porte-pièce (WT), voie qui pourra, de l'un côté, se relier au poste d'attente (18) et, de l'autre côté, à la position d'usinage (BP) du porte-pièce (WT), et
d.3 une première glissière de déplacement (43) pour l'ensemble à broche d'outil (10), détachable de sa position d'usinage (AP) sur la console à montant (4), étant en liaison avec une deuxième glissière de déplacement (44) et servant de position d'attente (16) pour plusieurs ensembles à broche d'outil (10, 11) ainsi que
d.4 un magasin à outils (14) tournant sur un axe horizontal (Y) et comportant des outils (WZ) tenus en des axes horizontaux (x1), outils prélevables à l'aide d'une griffe à pince double (ZG) horizontalement déplacable par au moins un seul pas de course, et insérables dans la douille (13) de l'ensemble à broche d'outil (10) se trouvant en position de travail.

2. Dispositif selon revendication 1, caractérisé par ce que le magasin à palettes (PM) sera arrêtable dans le nombre de positions d'orientation correspondant à celui des postes de chargement (21), et que les postes de chargement (21) du magasin à palettes (PM) et/ou les palettes à pièce (WP) et le dispositif d'amenée (ZU) ainsi que le porte-pièce (WT) ont été dotés des éléments de fixation (39) permettant l'ajustage et l'arrêt des palettes à pièce (WP) sur les postes de chargement (21), le dispositif d'amenée (ZU) et le porte-pièce (WT).

3. Dispositif selon revendication 2, caractérisé par ce que les postes de chargement (21) ont été munis des barres de guidage (FL) correspondant aux palettes à pièce (WP) standardisées, et des griffes de serrage (23) qui pourront être pressées contre les guide-palette (PF) par l'effet d'une pression de ressort (22).

4. Dispositif selon revendication 3, caractérisé par ce que le serrage des palettes à pièce (WP) standardisées dans les barres de guidage (FL) des postes de chargement (21) ne pourra se détacher qu'à une position d'orientation du dispositif d'amenée (ZU) permettant l'échange de la palette, et par un coulisseau (25) attaqué contrairement à la pression de ressort (22) par l'entraînement pivotant du dispositif d'amenée (24), et verrouillé avec ce dernier.

5. Dispositif selon revendication 2, caractérisé par ce que le dispositif d'amenée (ZU) pivotant autour d'un axe horizontal (50) a été conçu en tant que voie de transport (20) pour la palette à pièce (WP).

6. Dispositif selon revendication 4, caractérisé par ce que les palettes à pièce standardisées (WP) présentent des creux (33) et la voie de transport (20) des organes d'entraînement (26) s'engrenant dans ces creux, pour la saisie et l'acheminement des palettes à pièce (WP) disponibles au poste d'attente (18) du magasin à palettes (PM) et à la position d'usinage (BP) du porte-pièce (WT).

7. Dispositif selon revendications 1 et/ou 5, caractérisé par ce que la voie de transport (20) a été réalisée comme transporteur à chaîne (27).

8. Dispositif selon revendication 7, caractérisé par ce que le système d'entraînement du transporteur à chaîne (27) comprend le moteur d'entraînement (28), un arbre d'attaque (38) disposé dans l'axe de pivotement horizontal (50) du dispositif d'amenée (ZU) et un pignon d'attaque (30) fixé sur cet arbre, pignon s'engrenant dans la chaîne transporteuse (29).

9. Dispositif selon revendications 1 et/ou 5, caractérisé par ce que la voie de transport (20) consiste en deux broches filetées (32) disposées parallèlement dont les écrous (35) présentent des organes d'entraînement (34) qui s'engrènent dans les creux (33) des palettes à pièce (WP).

10. Dispositif selon revendication 9, caractérisé par ce que les broches filetées (32) ont été dotées d'un filet à droite et d'un filet à gauche et/ou ces dernières s'attaquent en sens opposé.

11. Dispositif selon revendications 1 et/ou 5, caractérisé par ce que la voie de transport (20) comprend deux crémaillères entraînées en sens opposé dont les bouts déplaçables se trouvant des deux côtés, ont été équipés des organes d'entraînement (34) conçus pour l'engrènement simultané et bilatéral dans les creux (33) des palettes à pièce (WP) du côté 'poste d'attente' et du côté 'porte-pièce'.

12. Dispositif selon revendications 1 et/ou 5, caractérisé par ce que la voie de transport (20) comporte deux barres télescopiques (37) entraînées en contre-sens, et à leurs bouts bilatéraux mobiles, des organes d'entraînement (34) ont été prévus pour l'attaque simultanée et bilatérale dans les creux (33) des palettes à pièce (WP) de côté 'poste d'attente' et de côté 'porte-pièce'.

13. Dispositif selon revendication 1, caractérisé par ce que le changeur d'ensemble à broche d'outil comprend une console à montant (4) verticale et disposée sur l'unité-machine de base (1) commune, et cette console présente un ensemble à broche d'outil (10) relié à elle, détachable et interchangeable selon les conditions de fonctionnement, ainsi que une (première) glissière de déplacement (43) disposée sur la console à montant (4) et conçue pour de déplacement directionnel de l'ensemble à broche d'outil (10), détaché de la console à montant (4), de sa position de travail (AP) à une position d'attente (16) disposée à une certaine distance de cette dernière.

14. Dispositif selon revendication 13, caractérisé par ce que la (première) glissière de déplacement (43) présente un segment levable et abaissable qui se trouve au-dessous de l'ensemble à broche d'outil (10) étant en position de travail (AP).

15. Dispositif selon revendication 13, caractérisé par ce que la console à montant (4) ou son élément de raccordement (45) pour la liaison détachable avec l'ensemble à broche d'outil (10), a été conçu de manière qu'elle ou qu'il pourra être abaissé de la position de travail (AP) respective.

16. Dispositif selon revendication 13, caractérisé par ce que la (première) glissière de déplacement (43) présente, à son bout, un branchement ou une plaque tournante (42) à laquelle une autre (deuxième) glissière de déplacement (44) a été jointe, glissière réalisée comme position d'attente (16) pour plusieurs ensembles à broche d'outil (10, 11) ou aboutissant à cette position.

17. Dispositif selon revendication 15, caractérisé par ce que la (première) glissière (43) présente une allure rectiligne et qu'à son bout, elle est jointe à une deuxième glissière, disposée perpendiculairement à la première et s'étendant des deux côtés en tant que position d'attente (16) destinée à plusieurs ensembles à broche d'outil (10, 11).

18. Dispositif selon revendication 13, caractérisé par ce que les ensembles à broche d'outil (10) ont été équipés d'un moteur synchrone disposé directement sur l'arbre de broche.

19. Dispositif selon revendication 18, caractérisé par ce que le changeur de fréquence pour le moteur synchrone a été disposé ou à l'intérieur de la console de montant (4) ou à l'une de ses faces extérieures, dans le domaine de son élément de raccordement (45) pour la connexion détachable avec l'ensemble à broche d'outil (10) se trouvant en position de travail (AP).

20. Dispositif selon revendication 13, caractérisé par ce que l'élément de raccordement (45) de la console à montant (4) et les faces de raccordement (46) des ensembles à broche d'outil (10) ont été pourvus des dispositif de serrage et d'ancrage permettant une commande à distance et un actionnement par air ou huile comprimé, ainsi que des raccords instantanés pour la transmission du courant.

21. Dispositif selon revendication 20, caractérisé par ce que l'élément de raccordement (45) a été conçu avec la possibilité de levage et d'abaissement par rapport à la console à montant (4).

22. Dispositif selon revendication 21, caractérisé par ce que l'élément de raccordement (45) dans le domaine de la face de raccordement (46), a été pourvu des rainures à queue d'aronde ou en T destinées à la réception des listels ajustés des ensembles à broche d'outil (10), listels s'accordant parfaitement avec ces rainures.

23. Dispositif selon revendication 1, caractérisé par ce que les outils (WZ) tenus par le magasin à outils (14) dans des axes horizontaux (x1), pourront se prélever moyennant une griffe à pince double (ZG) pivotable autour d'un axe horizontal (v) et disposée à une console tournant autour d'un axe vertical (w) à l'aide d'un entraînement mécanique, griffe déplaçable sur une glissière (41) par au moins un seul pas de course en avant et en arrière, parallèle à l'axe de raccordement d'outil ou de broche (Z).

24. Dispositif selon revendication 23, caractérisé par ce qu'au moyen de la griffe à pince double (ZG), en position de départ, un premier outil disponible dans le magasin à outils (14), pourra être pris par la première pince, et par le déplacement par un (premier) pas de course et rotation de la console (40) par 90° autour de l'axe vertical, un deuxième outil se trouvant dans la douille (13) est saisissable par la deuxième pince et amovible de la douille (13) par un pas de course de retour (R) de l'ensemble à broche d'outil (10) et qu'ensuite, par rotation de la griffe à pinces (ZG) par 180° autour de l'axe horizontal (x1), le premier outil pourra s'amener devant la douille (13) et s'insérer dans cette douille (13) par la réalisation d'un autre pas de course de retour, et après cela, par rotation renversée de la console (40) par 90° autour de l'axe vertical et déplacement par le pas de course de retour, le dispositif est déplaçable à la position de départ, où le deuxième outil pourra s'insérer dans le magasin à outils (14).

25. Dispositif selon revendication 24, caractérisé par ce qu'en la position de départ, grâce à la griffe à pince double (ZG), un premier outil, disponible dans le magasin à outils (14), pourra se prélever par la première pince et, par déplacement par un premier pas de course et rotation de la console (40) par 90° autour de l'axe vertical (w), un deuxième outil se trouvant dans la douille (13) est saisissable par la deuxième pince (Z2) et, par un deuxième pas de course, il pourra se retirer de la douille (13) et qu'ensuite, par pivotement de la griffe à pinces (ZG) par 180° autour de l'axe horizontal (x1), le premier outil (WZ1) est transportable en face de la douille (13) et insérable dans cette dernière par l'exécution d'un troisième pas de course de retour (H3) et, après cela, par pivotement renversé de la console (40) par 90° autour de l'axe vertical et réalisation du pas de course de retour, le dispositif est déplaçable à la position de départ, à laquelle le deuxième outil pourra se charger dans le magasin à outils (14).

26. Dispositif selon revendication 25, caractérisé par ce qu'au moyen de la griffe à pinces (ZG), en position de départ, un premier outil disponible dans le magasin à outils (14) pourra être saisi par la première pince et, par déplacement par un premier pas de course et pivotement par 90° autour de l'axe horizontal (x1) ainsi que par rotation de la console (40) par 90° autour de l'axe vertical et par pivotement renversé de la griffe à pinces (ZG) par 90° autour de l'axe horizontal, un deuxième outil se trouvant dans la douille (13) est saisissable par la deuxième pince et amovible de la douille (13) moyennant un deuxième pas de course, et qu'ensuite, par pivotement de la griffe à pinces (ZG) par 180° autour de l'axe horizontal (x1), le premier outil est transportable devant la douille (13) et insérable dans cette douille (13) par exécution d'un troisième pas de course de retour, et qu'après cela, par pivotement de la griffe à pinces (ZG) par 90° autour de l'axe horizontal (x1), rotation renversée de la console (40) par 90° autour de l'axe vertical, pivotement de retour de la griffe à pinces (ZG) par 90° autour de l'axe horizontal (x1) et déplacement par le pas de course renversé, le dispositif pourra être transporté à la position de départ, où le deuxième outil est insérable dans le magasin à outils (14).
